# EUROPEAN PATENT SPECIFICATION

(11) **EP 4 109 735 B1**
(45) Date of publication and mention of the grant of the patent: **30.04.2025**
(21) Application number: 21180912.4
(22) Date of filing: 22.06.2021
(51) Int. Cl.: H02P 6/32, H02M 3/00, H02P 25/022

(54) **SYSTEM FOR CONTROLLING AN INDUCTOR FREEWHEELING VOLTAGE**
SYSTEM ZUR STEUERUNG EINER INDUKTORFREILAUFSPANNUNG
SYSTÈME DE RÉGLAGE DE TENSION DE ROUE LIBRE D'INDUCTEUR

(43) Date of publication of application: 28.12.2022
(73) Proprietor: ABB Schweiz AG, 5400 Baden (CH)
(72) Inventor: Vancu, Florian, 9852 Schlieren (CH); Fueglister, Markus, 5300 Muelligen (CH)
(74) Representative: AOMB Polska Sp. z.o.o.

(56) References cited:
- DE-A1- 102016 219 770
- FR-A1- 2 944 398
- US-B1- 6 191 562

## Description

### Technical field

The present invention relates to an electrical circuit for controlling an inductor freewheeling voltage.

### Background art

A DC current needs to be controlled in the excitation winding of synchronous motors/generators. The current is increased by applying a positive voltage across it and it is controlled by a switch. In order to quickly discharge the current in this inductance, a negative voltage needs to be applied across it. Feeding the energy back into the DC bus is a common solution, but requires an active load consisting of a resistor and a switch to discharge the capacitors and prevent overvoltage. Other solutions include a resistor, which leads to a current-dependent ramp-down voltage, or a voltage clamp placed parallel to the freewheeling switch.

Document US6288508B1 discloses a braking system for an electric motor operated vehicle including a system for providing both regenerative and reverse excitation braking and shifting between the braking modes in response to operator demand. Solution provided in this document discloses a deceleration of the motor by using said motor as a generator and either charges the battery or discharges its generated current through a resistive load so as to provide regenerative braking.

Document EP2747287A1 discloses an arrangement which has a free-wheeling circuit comprising a free-wheeling diode and a limiting element e.g. breakdown diode, that is connected parallel to a switching element e.g. MOSFET. Another switching element is connected in series with the circuit. A controller has an evaluation and controlling unit for synchronous controlling of the elements. The controlling unit is connected with a galvanically separated controller and a control input, where the controlling of the elements is carried out based on determined control supply voltage.

Document EP1675245A2 discloses a circuit arrangement for the rapid reduction of an induced current which can be used in particular in conjunction with a voltage regulator for a generator in a vehicle electrical system and causes an increase in the freewheeling voltage. Thus, in the shutdown of consumers in the excitation winding induced overvoltage can be rapidly reduced and the generator are thus quickly de-energized.

The document DE102016219770A1 describes a synchronous machine system for vehicles, specifically designed to quickly and reliably dissipate stored magnetic energy in the rotor's excitation coil during emergencies. The system uses components such as Zener diodes, suppressor diodes, or varistors that reduce their resistance at a specific voltage, allowing for rapid energy dissipation without overloading the DC link capacitor. This invention offers a cost-effective and space-efficient solution for demagnetizing the rotor, thereby enhancing the safety and operational efficiency of electric and hybrid vehicles.

The document FR2944398A1 describes a device for feeding the rotor winding of a rotating electrical machine, such as an alternator or alternator-starter in a motor vehicle. The device includes a rapid demagnetization circuit to prevent overvoltage damage during load dumps or mode switching. Key components include a switching element, Zener diodes, and a control circuit that opens the demagnetization switch in response to overvoltage, applying a reverse voltage to the rotor winding to quickly dissipate stored energy. This solution enhances electromagnetic compatibility (EMC) and protects vehicle electronics efficiently and cost-effectively.

The document US6191562B1 describes an invention that provides a fast and reliable degradation of stored magnetic energy in the generator's excitation coil, which is particularly important during sudden load drops. The system uses a circuit with a Zener diode and MOSFET transistors, allowing for rapid reduction of energy in the excitation winding and decreasing the surge voltage on the generator's output side. This solution leads to cost savings, reduced installation space requirements, and improved dynamic response control in electric vehicles.

### Summary

The purpose of the invention is to provide a circuit for controlling an inductor freewheeling voltage which comprises fewer high-power components than solutions known from the state of the art.

The invention is defined in the independent apparatus claim 1 and the preferred embodiments in the dependent claims.

The present invention discloses a system for controlling an inductor freewheeling voltage comprising a first switch, and a second switch, wherein the at least one from the first switch and the second switch is a unipolar transistor or IGBT transistor, a first diode, an inductor. The first switch, in conducting state, connects a first terminal of the inductor with a power bus and wherein the first switch is controlled by a first control signal. A first terminal of the first diode is connected to a ground, and a second terminal of the first diode is connected to the first terminal of the inductor. The first diode is connected to the ground allowing an electric current to pass from the ground to the first terminal of the inductor. The second switch, in conducting state, connects a second terminal of the inductor with the ground. The system is characterized in that it comprises a switch control circuit, which comprises a second resistor, a third resistor, a fourth resistor, a third diode, a transistor and at least one Zener diode. A first terminal of a first Zener diode is connected to the second terminal of the inductor. A second terminal of a last Zener diode is connected to a first terminal of a third diode. All Zener diodes are connected in series, in the same direction and a forward direction of the Zener diodes from the first terminal of the third diode to the second terminal of the inductor. A second terminal of the third diode is connected to a first terminal of the second resistor, and to a base terminal of the transistor, wherein a forward direction of the third diode is from the second terminal of the last Zener diode to the first terminal of the second resistor. A second terminal of the second resistor is connected to the ground. A collector terminal of the transistor is connected to an auxiliary power supply configured to provide stable DC voltage. An emitter terminal of the transistor is connected to the diode and to a first terminal of the third resistor. A second terminal of the third resistor is connected to a first terminal of the fourth resistor, and to a gate terminal of the second switch. A second terminal of the fourth resistor is connected to the ground. The switch control circuit is configured to be controlled with a second control signal, delivered to an input terminal of the switch control circuit, wherein in a first state of the second control signal the switch control circuit keeps the second switch open and in a second state of the second control signal the switch control circuit keeps the second switch causing a voltage drop across the second switch.

In preferred embodiment the switch control circuit comprises a second diode configured to deliver, to the switch control circuit, the second control signal.

In another embodiment the switch control circuit comprises a first resistor and a Zener diode wherein a first terminal of the Zener diode is connected to the second terminal of the inductor, a second terminal of the Zener diode is connected to a first terminal of the first resistor, a gate terminal of the second switch, and to the diode. A forward direction of the Zener diode is from the gate terminal of the second switch to the second terminal of the inductor, a second terminal of the first resistor is connected to the ground.

In yet another embodiment the system comprising a capacitor, wherein a first terminal of the capacitor is connected to the gate terminal of the second switch and a second terminal of the capacitor is connected to the ground.

### Brief description of drawings

The present invention will be now described with reference to the accompanying drawings, in which:
Fig. 1 shows a general circuit topology according to the present invention,
Fig. 2 presents the simplest implementation of the present invention,
Fig. 3 presents a circuit which with reduced standby losses.

### Detailed description

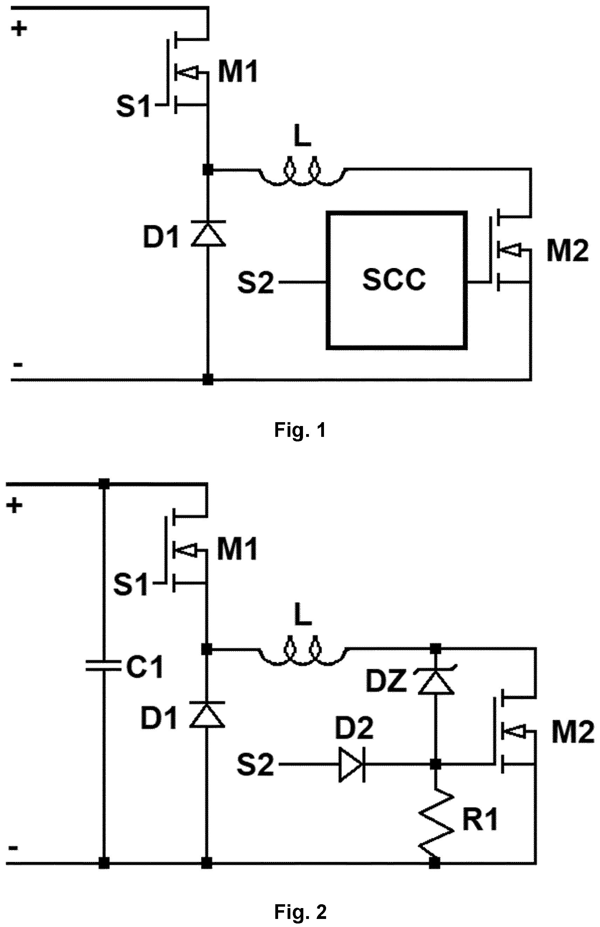

A general concept of this invention is shown in Fig. 1. The novel implementation shown in its simplest form, merges the functionality of the power switch and, preferably, the constant voltage load in one component, namely switch M2. This reduces the power components count and the required heat sink area since only one power component to reduce a current is needed, that is switch M2.

During the current build-up phase both switches M1 and M2 shown in Fig. 1 are turned on - a first control signal S1 and a second control signal S2 are in a first state. A power bus + is connected through the first switch M1 with an inductor L which is further connected to a ground - by means of the second switch M2. Freewheeling is achieved by turning off the first switch M1 (by changing the state of the first control signal S1), forcing the current to flow through the freewheeling diode (first diode D1). When the current in the inductor L needs to be decreased, the gate voltage v_{G_M2} is set low due to change of the second control signal S2. This leads to a decrease of the gate voltage of the second switch M2. The second switch M2 starts to close, which leads to an increase of its drain-source voltage v_{DS_M2}. A switch control circuit SCC prevent the second switch M2 from fully closing. In a preferred embodiment a constant voltage drop is achieved across the second switch M2 which makes adjusting the current easier. The person skilled in the art will know that other transistor types may be used in this application as the first switch M1 and/or the second switch M2 and transistors shown on fig. 1-3 serves only as examples - bipolar, unipolar or IGBT transistors may be used in this application. In preferred embodiment a capacitor C2 is connected such that a first terminal of the capacitor C2 is connected to the gate terminal of the second switch M2 and a second terminal of the capacitor C2 is connected to the ground -. This capacitor C2 provides slower changes in a voltage across the second switch S2.

It should be noted that in figures and in the description there is the power bus +, which applies a positive voltage, and the ground -, which has a 0V potential. It should be noted that in other cases, in which, for example, there is the ground - and a negative power bus some components will be connected accordingly and overall circuit connections might change. The person skilled in the art will know how to adjust disclosed invention in such cases.

The switch control circuit SCC is a circuit which may be described as a signal converter which transforms the second control signal S2 into a signal which control the second switch M2 while preventing the second switch M2 from being fully closed. Hereinafter it is assumed that the second control signal S2 is a digital signal but it should be noted that it also may be an analog signal.

In the preferred embodiment the switch control circuit SCC comprises a second diode D2 configured to deliver, to the switch control circuit SCC, the second control signal S2. The second diode D2 provides a secured input and prevent applying high voltage/current to a source of the second control signal S2.

Fig. 2 shows a simples implementation of the general concept of the present invention. In this circuit the switch control circuit SCC comprises a first resistor R1 and a Zener diode DZ connected such that a first terminal of the Zener diode DZ is connected to the second terminal of the inductor L, a second terminal of the Zener diode DZ is connected to a first terminal of the first resistor R1, a gate terminal of the second switch M2, and the input terminal. A forward direction of the Zener Diode is from the gate terminal of the second switch M2 to the second terminal of the inductor L, a second terminal of the first resistor R1 is connected to the ground -. In this implementation when the current in the inductor L needs to be decreased, the gate voltage v_{G_M2} is set low. This leads to a decrease of the gate voltage of the second switch M2, caused by the pull-down resistor R1. The second switch M2 starts to close, which leads to an increase of its drain-source voltage v_{DS_M2}. Eventually the drain source voltage reaches the breakdown voltage of the Zener diode DZ, and the diode starts to conduct, preventing the second switch M2 from fully closing, and causing a constant voltage drop across its drain-source junction.

The present invention makes it possible, with the appropriate gating circuit, to achieve the functions performed by the second switch M2 and the voltage clamp known from the prior art by using a single power component, removing the need for an additional high-power component. Additionally a capacitance value, as well as the voltage rating, of the DC stabilizing capacitor C1 are decreased, when used.

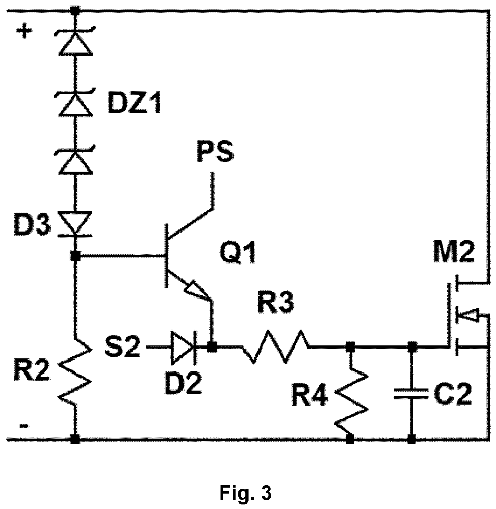

In fig. 3 a more complex circuit is presented (only the switch control circuit SSC and the second switch M2 are presented). In this embodiment a first terminal of a first Zener diode DZ1 is connected to the second terminal of the inductor L, a second terminal of a last Zener diode DZ1 is connected to a first terminal of a third diode D3. All Zener diodes DZ1 are connected in series, in the same direction and a forward direction of the Zener diodes DZ1 if from the first terminal of the third diode D3 to the second terminal of the inductor L. A second terminal of the third diode D3 is connected to a first terminal of the second resistor R2, and to a base terminal of the transistor Q1. A forward direction of the third diode D3 is from the second terminal of the last Zener diode DZ1 to the first terminal of the second resistor R2. A second terminal of the second resistor R2 is connected to the ground -. A collector terminal of the transistor Q1 is connected to an auxiliary power supply PS which is configured to provide stable DC voltage. An emitter terminal of the transistor Q1 is connected to the input terminal and to a first terminal of the third resistor R3, A second terminal of the third resistor R3 is connected to a first terminal of the fourth resistor R4, and to a gate terminal of the second switch M2, a second terminal of the fourth resistor R4 is connected to the ground -.

This adds an additional low-voltage, low-power transistor Q1. Its purpose is to reduce the current flow in the Zener diodes, and thus minimize the overall standby losses of the circuit. A disadvantage is the need for a stable auxiliary supply for the gating circuit.

It should be noted that in this embodiment the transistor Q1 is presented and described as a bipolar transistor. It should be noted that an unipolar transistor also may be used.

### List of reference signs in Drawings:

M1 - first switch
M2 - second switch
D1 - first diode
D2 - second diode
D3 - third diode
DZ, DZ1 - Zener diode
L - inductor
+ - power bus
- - ground
S1 - first control signal
S2 - second control signal
R1 - first resistor
R2 - second resistor
R3 - third resistor
R4 - fourth resistor
Q1 - transistor
C1 - stabilizing capacitor
C2 - capacitor
SCC - switch control circuit
PS - auxiliary power supply

## Claims

1. A system for controlling an inductor freewheeling voltage comprising:
a first switch (M1) and a second switch (M2), wherein the at least one from the first switch (M1) and the second switch (M2) is a unipolar transistor or IGBT transistor,
a first diode (D1),
an inductor (L),
wherein in conducting state, the first switch (M1)connects a first terminal of the inductor (L) with a power bus (+) and wherein the first switch (M1) is controlled by a first control signal (S1),
wherein a first terminal of the first diode (D1) is connected to a ground (-) and a second terminal of the first diode (D1) is connected to the first terminal of the inductor (L),
wherein the first diode (D1) is connected to the ground allowing an electric current to pass from the ground (-) to the first terminal of the inductor (L),
wherein the second switch (M2), in conducting state, connects a second terminal of the inductor (L) with the ground (-),
the system further comprises a switch control circuit (SCC),
wherein the switch control circuit (SCC) is configured to be controlled with a second control signal (S2), delivered to an input terminal of the switch control circuit (SCC),and wherein in a first state of the second control signal (S2) the switch control circuit (SCC) keeps the second switch (M2) open and in a second state of the second control signal (S2) the switch control circuit (SCC) keeps the second switch (M2) causing a voltage drop across the second switch (M2),
the system is **characterized in that** the switch control circuit (SCC) comprises a second resistor (R2), a third resistor (R3), a fourth resistor (R4), a third diode (D3), a transistor (Q1) and at least one Zener diode (DZ1) wherein,
a first terminal of a first Zener diode (DZ1) is connected to the second terminal of the inductor (L),
a second terminal of a last Zener diode (DZ1) is connected to a first terminal of a third diode (D3),
all Zener diodes (DZ1) are connected in series, in the same direction and a forward direction of the Zener diodes (DZ1) from the first terminal of the third diode (D3) to the second terminal of the inductor (L),
a second terminal of the third diode (D3) is connected to a first terminal of the second resistor (R2), and to a base terminal of the transistor (Q1), wherein a forward direction of the third diode (D3) is from the second terminal of the last Zener diode (DZ1) to the first terminal of the second resistor (R2),
a second terminal of the second resistor (R2) is connected to the ground (-),
a collector terminal of the transistor (Q1) is connected to an auxiliary power supply (PS) configured to provide stable DC voltage,
an emitter terminal of the transistor (Q1) is connected to the diode (D2) and to a first terminal of the third resistor (R3),
a second terminal of the third resistor (R3) is connected to a first terminal of the fourth resistor (R4), and to a gate terminal of the second switch (M2),
a second terminal of the fourth resistor (R4) is connected to the ground (-).

2. The system according to claim 1, **characterized in that** the switch control circuit (SCC) comprises a second diode (D2) configured to deliver, to the switch control circuit (SCC), the second control signal (S2).

3. The system according to claim 2, **characterized in that** the switch control circuit (SCC) comprises a first resistor (R1) and a Zener diode (DZ) wherein
a first terminal of the Zener diode (DZ) is connected to the second terminal of the inductor (L),
a second terminal of the Zener diode (DZ) is connected to a first terminal of the first resistor (R1), a gate terminal of the second switch (M2), and to the diode (D2), wherein a forward direction of the Zener diode (DZ) is from the gate terminal of the second switch (M2) to the second terminal of the inductor (L),
a second terminal of the first resistor (R1) is connected to the ground (-).

4. The system according to claim 3, **characterized in that** it further comprises a capacitor (C2), wherein a first terminal of the capacitor (C2) is connected to the gate terminal of the second switch (M2) and a second terminal of the capacitor (C2) is connected to the ground (-).

## Patentansprüche

1. Ein System zur Steuerung der Freilaufspannungeines Induktors, welches Folgendes umfasst:
einen ersten Schalter (M1) und einen zweiten Schalter (M2), wobei der erste Schalter (M1) und/oder der zweite Schalter (M2) ein unipolarer Transistor oder ein IGBT-Transistor ist,
eine erste Diode (D1),
einen Induktor (L),
wobei der erste Schalter (M1) im leitenden Zustand einen ersten Anschluss des Induktors (L) mit einem Stromversorgungsbus (+) verbindet und wobei der erste Schalter (M1) durch ein erstes Steuersignal (S1) gesteuert wird,
wobei ein erster Anschluss der ersten Diode (D1) mit einer Erde (-) verbunden ist und ein zweiter Anschluss der ersten Diode (D1) mit dem ersten Anschluss der Induktivität (L) verbunden ist,
wobei die erste Diode (D1) mit der Erde verbunden ist, wodurch ein elektrischer Strom von der Erde (-) zum ersten Anschluss der Induktivität (L) fließen kann,
wobei der zweite Schalter (M2) im leitenden Zustand einen zweiten Anschluss des Induktors (L) mit der Erde (-) verbindet,
das System ferner eine Schaltsteuerschaltung (SCC) umfasst,
wobei die Schaltsteuerschaltung (SCC) so konfiguriert ist, dass sie mit einem zweiten Steuersignal (S2) gesteuert wird, an einen Eingangsanschluss der Schaltsteuerschaltung (SCC) geliefert wird, und wobei in einem ersten Zustand des zweiten Steuersignals (S2) die Schaltsteuerschaltung (SCC) den zweiten Schalter (M2) offen hält und in einem zweiten Zustand des zweiten Steuersignals (S2) die Schaltsteuerschaltung (SCC) den zweiten Schalter (M2) offen hält, wodurch ein Spannungsabfall über dem zweiten Schalter (M2) verursacht wird,
das System **dadurch gekennzeichnet ist, dass** die Schaltsteuerschaltung (SCC) einen zweiten Widerstand (R2), einen dritten Widerstand (R3), einen vierten Widerstand (R4), eine dritte Diode (D3), einen Transistor (Q1) und mindestens eine Zenerdiode (DZ1) umfasst, wobei ein erster Anschluss einer ersten Zenerdiode (DZ1) mit dem zweiten Anschluss des Induktors (L) verbunden ist,
ein zweiter Anschluss einer letzten Zenerdiode (DZ1) mit einem ersten Anschluss einer dritten Diode (D3) verbunden ist,
alle Zenerdioden (DZ1) in Reihe geschaltet sind, in derselben Richtung und einer Durchlassrichtung der Zenerdioden (DZ1) von dem ersten Anschluss der dritten Diode (D3) zu dem zweiten Anschluss des Induktors (L),
ein zweiter Anschluss der dritten Diode (D3) mit einem ersten Anschluss des zweiten Widerstands (R2) und mit einem Basisanschluss des Transistors (Q1) verbunden ist, wobei eine Durchlassrichtung der dritten Diode (D3) vom zweiten Anschluss der letzten Zenerdiode (DZ1) zum ersten Anschluss des zweiten Widerstands (R2) verläuft,
ein zweiter Anschluss des zweiten Widerstands (R2) mit der Erde (-) verbunden ist,
ein Kollektoranschluss des Transistors (Q1) mit einer Hilfsstromversorgung (PS) verbunden ist, die so konfiguriert ist, dass sie eine stabile Gleichspannung liefert,
ein Emitteranschluss des Transistors (Q1) mit der Diode (D2) und mit einem ersten Anschluss des dritten Widerstands (R3) verbunden ist,
ein zweiter Anschluss des dritten Widerstands (R3) mit einem ersten Anschluss des vierten Widerstands (R4) und mit einem Gate-Anschluss des zweiten Schalters (M2) verbunden ist,
ein zweiter Anschluss des vierten Widerstands (R4) mit der Erde (-) verbunden ist.

2. Das System gemäß Anspruch 1, **dadurch gekennzeichnet, dass** die Schaltsteuerschaltung (SCC) eine zweite Diode (D2) umfasst, die so konfiguriert ist, dass sie das zweite Steuersignal (S2) an die Schaltsteuerschaltung (SCC) liefert.

3. Das System gemäß Anspruch 2, **dadurch gekennzeichnet, dass** die Schaltsteuerschaltung (SCC) einen ersten Widerstand (R1) und eine Zenerdiode (DZ) umfasst, wobei
ein erster Anschluss der Zenerdiode (DZ) mit dem zweiten Anschluss des Induktors (L) verbunden ist,
ein zweiter Anschluss der Zenerdiode (DZ) mit einem ersten Anschluss des ersten Widerstands (R1), einem Gate-Anschluss des zweiten Schalters (M2) und mit der Diode (D2) verbunden ist, wobei eine Durchlassrichtung der Zenerdiode (DZ) vom Gate-Anschluss des zweiten Schalters (M2) zum zweiten Anschluss des Induktors (L) verläuft,
ein zweiter Anschluss des ersten Widerstands (R1) mit der Erde (-) verbunden ist.

4. Das System nach Anspruch 3, **dadurch gekennzeichnet, dass** es ferner einen Kondensator (C2) umfasst, wobei ein erster Anschluss des Kondensators (C2) mit dem Gate-Anschluss des zweiten Schalters (M2) verbunden ist und ein zweiter Anschluss des Kondensators (C2) mit der Erde (-) verbunden ist.

## Revendications

1. Un système de contrôle de la tension de roue libre d'un inducteur comprenant :
un premier commutateur (M1) et un deuxième commutateur (M2), dans lequel au moins l'un du premier commutateur (M1) et du deuxième commutateur (M2) est un transistor unipolaire ou un transistor IGBT,
une première diode (D1),
un inducteur (L),
dans lequel, à l'état conducteur, le premier commutateur (M1) connecte une première borne de l'inducteur (L) à un bus d'alimentation (+) et où le premier commutateur (M1) est commandé par un premier signal de commande (S1),
dans lequel une première borne de la première diode (D1) est connectée à une masse (-) et une deuxième borne de la première diode (D1) est connectée à la première borne de l'inducteur (L),
dans lequel la première diode (D1) est connectée à la masse, ce qui permet à un courant électrique de passer de la masse (-) à la première borne de l'inducteur (L),
dans lequel le deuxième commutateur (M2), à l'état conducteur, connecte une deuxième borne de l'inducteur (L) à la masse (-),
le système comprend en outre un circuit de commande de commutateur (SCC),
dans lequel le circuit de commande de commutateur (SCC) est configuré pour être commandé par un deuxième signal de commande (S2), délivré à une borne d'entrée du circuit de commande de commutateur (SCC), et dans lequel, dans un premier état du deuxième signal de commande (S2), le circuit de commande de commutateur (SCC) maintient le deuxième commutateur (M2) ouvert et, dans un deuxième état du deuxième signal de commande (S2), le circuit de commande de commutateur (SCC) maintient le deuxième commutateur (M2) en provoquant une chute de tension dans le deuxième commutateur (M2),
le système est **caractérisé en ce que** le circuit de commande de commutateur (SCC) comprend une deuxième résistance (R2), une troisième résistance (R3), une quatrième résistance (R4), une troisième diode (D3), un transistor (Q1) et au moins une diode Zener (DZ1), dans lequel une première borne d'une première diode Zener (DZ1) est connectée à la deuxième borne de l'inducteur (L),
une deuxième borne d'une dernière diode Zener (DZ1) est connectée à une première borne d'une troisième diode (D3),
toutes les diodes Zener (DZ1) sont connectées en série, dans le même sens et dans un sens direct des diodes Zener (DZ1), de la première borne de la troisième diode (D3) à la deuxième borne de l'inducteur (L),
une deuxième borne de la troisième diode (D3) est connectée à une première borne de la deuxième résistance (R2) et à une borne de base du transistor (Q1), dans lequel le sens direct de la troisième diode (D3) va de la deuxième borne de la dernière diode Zener (DZ1) à la première borne de la deuxième résistance (R2),
une deuxième borne de la deuxième résistance (R2) est connectée à la masse (-),
une borne collectrice du transistor (Q1) est connectée à une alimentation auxiliaire (PS) configurée pour fournir une tension continue stable,
une borne émettrice du transistor (Q1) est connectée à la diode (D2) et à une première borne de la troisième résistance (R3),
une deuxième borne de la troisième résistance (R3) est connectée à une première borne de la quatrième résistance (R4) et à une borne de grille du deuxième commutateur (M2),
une deuxième borne de la quatrième résistance (R4) est connectée à la masse (-).

2. Le système selon la revendication 1, **caractérisé en ce que** le circuit de commande de commutateur (SCC) comprend une deuxième diode (D2) configurée pour délivrer, au circuit de commande de commutateur (SCC), le deuxième signal de commande (S2).

3. Le système selon la revendication 2, **caractérisé en ce que** le circuit de commande de commutateur (SCC) comprend une première résistance (R1) et une diode Zener (DZ) dans lequel
une première borne de la diode Zener (DZ) est connectée à la deuxième borne de l'inducteur (L),
une deuxième borne de la diode Zener (DZ) est connectée à une première borne de la première résistance (R1), à une borne de grille du deuxième commutateur (M2) et à la diode (D2), dans lequel une direction directe de la diode Zener (DZ) va de la borne de grille du deuxième commutateur (M2) à la deuxième borne de l'inducteur (L),
une deuxième borne de la première résistance (R1) est connectée à la masse (-).

4. Le système selon la revendication 3, **caractérisé en ce qu'il** comprend en outre un condensateur (C2), dans lequel une première borne du condensateur (C2) est connectée à la borne de grille du deuxième commutateur (M2) et une deuxième borne du condensateur (C2) est connectée à la masse (-).
